# EUROPÄISCHE PATENTSCHRIFT

(11) **EP 3 192 935 B1**
(45) Veröffentlichungstag und Bekanntmachung des Hinweises auf die Patenterteilung: **15.04.2020**
(21) Anmeldenummer: 16151426.0
(22) Anmeldetag: 15.01.2016
(51) Int. Cl.: E04F 15/02, E04F 15/10

(54) **BODENBELAGSELEMENT MIT RUTSCHHEMMENDEM RÜCKEN**
FLOOR COVERING ELEMENT WITH ANTI-SLIP BACKING
ÉLEMENT DE REVÊTEMENT DE SOL À FACE ARRIÈRE ANTIDÉRAPANTE

(43) Veröffentlichungstag der Anmeldung: 19.07.2017
(73) Patentinhaber: Windmöller GmbH, 32832 Augustdorf (DE)
(72) Erfinder: Windmöller, Ulrich, 33758 Schloß Holte-Stukenbrock (DE); Rose, Stefan, 59581 Warstein (DE)
(74) Vertreter: Wagner Albiger & Partner Patentanwälte mbB

(56) Entgegenhaltungen:
- EP-A1- 2 883 712
- CH-A5- 586 334
- US-B1- 8 156 710

## Beschreibung

Die vorliegende Erfindung betrifft ein Bodenbelagselement.

Fußbodenbeläge existieren in sehr unterschiedlichen Ausführungsformen. Beispielsweise kann es sich bei den Bodenbelagselementen, die den Fußbodenbelag bilden, um Fliesen oder Dielen handeln, die aus Kunststoffmaterialien hergestellt sind und eine gewisse Biegsamkeit und Flexibilität aufweisen. Die Verlegung kann lose schwimmend (sog. Looselay) erfolgen. Dies bietet den Vorteil einer einfachen und sauberen Verlegung. Zudem ist der Fußbodenbelag in diesem Fall bei Bedarf leicht und rückstandsfrei rückbaubar. Dies ist ein Vorteil gegenüber einer Verlegung, bei welcher die Elemente mit dem Untergrund verklebt werden.

Der entstehende Fußbodenbelag soll möglichst gleichmäßig und eben sein, und die Bodenbelagselemente sollen zu diesem Zweck dicht nebeneinander verlegt werden. Es soll überdies vermieden werden, dass die lose verlegten Bodenbelagselemente sich auf dem Untergrund verschieben und driften können, damit sich keine Fugen bilden, in welche Schmutz eindringen kann. Es ist allgemein erwünscht, dass die Bodenbelagselemente satt auf dem Untergrund aufliegen und in dem verlegten Zustand eine Einheit mit diesem bilden, ohne dass eine mechanische Verbindung oder eine Klebeverbindung mit der Oberfläche des Untergrunds gebildet wird. Bei Bedarf soll es möglich sein, einzelne Elemente in einfacher Weise auswechseln zu können, ohne größere Teile des Verbunds des Belags auflösen zu müssen.

US 8156710 B1 offenbart einen rückbaubaren Bodenbelag gemäß der Präambel von Anspruch 1, mit einem rutschhemmenden Rücken, der eine Prägung aufweist.

Aufgabe der vorliegenden Erfindung ist es daher, ein Bodenbelagselement zur Bildung eines Fußbodenbelags zu entwickeln, der auch im schwimmend verlegten Zustand eine gute Verbindung mit dem Untergrund eingeht und einen gleichmäßigen Verbund schafft, der leicht rückbaubar ist und ein leichtes Auswechseln einzelner Elemente ermöglicht.

Diese Aufgabe wird erfindungsgemäß durch ein Bodenbelagselement mit den Merkmalen des Anspruchs 1 gelöst.

Das erfindungsgemäße Bodenbelagselement zur Bildung eines Fußbodens weist ein Flächengewicht gemäß ISO 23997 von 3,5- 8,0 kg/m² auf. Seine Dichte liegt zwischen 1,5 und 2,5 g/cm³. Es umfasst eine weiche elastische Kernschicht aus einem Polyurethanmaterial (PU), sowie einen rutschhemmenden Rücken, der eine Prägung aufweist. Dieser Rücken sorgt für einen guten Kontakt mit dem Untergrund, während die Weichheit und Elastizität des Bodenelements für ein gutes Anschmiegen an den Untergrund sorgt. Gleichzeitig liegt das Bodenbelagselement aufgrund seines hohen Flächengewichts satt auf dem Untergrund auf.

Die Seitenkanten des Bodenbelagselements sind derart ausgebildet, dass zwei benachbart verlegte Bodenbelagselemente an ihren Seitenkanten verriegelungsfrei aufeinander stoßen. Dies bedeutet, dass sich benachbarte Bodenbelagselemente ohne Widerstand seitlich, d.h. in horizontal gegeneinander oder ineinander schieben lassen und sich in entgegengesetzter Richtung leicht wieder voneinander lösen lassen. Die benachbarten Bodenbelagselemente stoßen somit derart an ihren Kanten gegeneinander, dass die erwünschte dichte Oberfläche mit einer kompakten Anmutung gebildet wird.

Durch die Kombination der vorstehend genannten Merkmale wird ein Bodenbelagselement gebildet, durch welches sich ein dicht verlegter und satt aufliegender Fußbodenbelag im schwimmend verlegten Zustand bilden lässt. Einzelne Elemente lassen sich aus dem Fußboden relativ leicht herauslösen und auswechseln.

Vorzugsweise wird der Rücken durch die Unterseite einer elastischen Rückenschicht aus einem Polyurethanmaterial gebildet, die unterhalb der Kernschicht angeordnet ist. Die Materialien der Kernschicht und der Rückenschicht können sich bezüglich der Rezeptur des Polyurethans unterscheiden oder auch identisch sein, oder sich bezüglich gegebenenfalls enthaltener Füllstoffe unterscheiden.

In einer alternativen Ausführungsform der vorliegenden Erfindung wird der Rücken durch die Unterseite der Kernschicht selbst gebildet.

Weiter vorzugsweise weist die Prägung des Rückens eine Wabenstruktur oder eine Pyramidenstruktur auf. Die Erhebungen der Waben oder der Pyramiden haben unmittelbaren Kontakt mit dem Untergrund, können sich jedoch geringfügig eindrücken und sich somit an den Untergrund anpassen. Die Waben- oder Pyramidenstruktur bildet eine Profilierung, die rutschhemmend wirkt.

Die Seitenkanten weisen an der Oberseite und an der Unterseite des Bodenbelagselements jeweils eine Fase auf. Die Fase an der Oberseite dient zur Bildung einer Fuge am Übergang zwischen den benachbarten Bodenbelagselementen, die aus gestalterischen Gründen erwünscht sein kann. Die Fase an der Unterseite des Bodenbelags hat die Funktion, Schmutz, Staub oder Fremdkörper aufzunehmen, die sich zwischen den Seitenkanten der beim Verlegen gegeneinander geschobenen Bodenbelagselemente sammeln können.

Desweiteren weist das Bodenbelagselement an seinen Seitenkanten Nut-Feder-Profile auf, die derart ausgebildet sind, dass Nuten und Federn an einander zugewandten Seitenkanten benachbart verlegter Bodenbelagselemente in horizontaler Richtung verriegelungsfrei ineinander einschiebbar sind. Durch dieses Einschieben wird eine Nut-Feder-Verbindung geschaffen, die es gestattet, die beiden Elemente beim Rückbau zum

Lösen der Verbindung wieder problemlos ohne Widerstand auseinanderzuziehen. Die Nut-Feder-Verbindung kann aufgrund der Elastizität und Weichheit der Kernschicht jedoch auch zulassen, dass eines der Bodenbelagselemente gegenüber dem anderen vom Fußboden angehoben wird, wobei sich die Feder aufgrund der Kompressibilität der Kernschicht etwas zusammendrücken kann und die Seitenkanten der beiden Bodenbelagselemente in senkrechter Richtung übereinander hinweg gleiten können. In diesem Fall ist die Nut-Feder-Verbindung also ausreichend stabil, um im verlegten Zustand eine sichere Verbindung der benachbarten Bodenbelagselemente zu gewährleisten, jedoch flexibel genug, um ein Ausheben eines einzelnen Bodenbelagselement aus dem Verbund des Fußbodens gegen einen gewissen Widerstand zuzulassen.

Dabei weisen die Nuten und Federn der Nut-Feder-Profile jeweils einen etwa trapezförmigen Querschnitt mit abgeschrägten Flanken auf. Dieser Querschnitt begünstigt das Ausheben eines einzelnen Bodenbelagselements, da die abgeschrägten Flanken der ineinander greifen Nuten und Federn übereinander weg gleiten können.

Vorzugsweise ist die Fase an der Unterseite des Bodenbelagselements ausgeprägter als an dessen Oberseite. D.h., das zwischen zwei benachbart verlegten Bodenbelagselementen an der Unterseite des Fußbodens ein relativ großer Zwischenraum gebildet wird, der durch die Fasen an dieser Stelle begrenzt wird, während die an der Oberseite des Fußbodens entstehende Fuge relativ schmal bleibt. Dies kann erwünscht sein, um ein Ansammeln von Schmutz in dieser Fuge zu begrenzen.

Weiter vorzugsweise enthält zumindest die Kernschicht Füllstoffe zur Gewichtserhöhung. Es kann sich hierbei um mineralische Füllstoffe handeln. Weitere Schichten des Bodenbelagselements können ebenfalls solche Füllstoffe enthalten.

Weiter vorzugsweise umfasst das erfindungsgemäße Bodenbelagselement ferner eine Glasfasermatte, die auf oder in der Kernschicht auf- bzw. einliegt. Diese Glasfasermatte dient zur Stabilisierung des Schichtverbunds.

Weiter vorzugsweise umfasst das Bodenbelagselement eine Dekorschicht und eine die Dekorschicht abdeckende transparente Nutzschicht.

Gemäß einer weiteren Ausführungsform der Erfindung weist das Bodenbelagselement eine textile Schicht auf, die die Oberseite des Bodenbelagselements bildet. Diese textile Schicht bildet z.B. einen Flor, so dass das Bodenbelagselement nach Art einer Teppichfliese verwendet werden kann.

Weiter vorzugsweise weist das erfindungsgemäße Bodenbelagselement eine Dornbiegung nach EN ISO 24344 von weniger als 20 mm auf.

Weiter vorzugsweise weist der Rücken einen Resteindruck nach EN ISO 24343 von weniger als 0,1 mm auf.

Weiter vorzugsweise weist das Bodenbelagselement eine Härte Shore A von 50 bis 90 auf.

Im folgenden werden bevorzugte Ausführungsbeispiele der vorliegenden Erfindung anhand der Zeichnung näher erläutert.

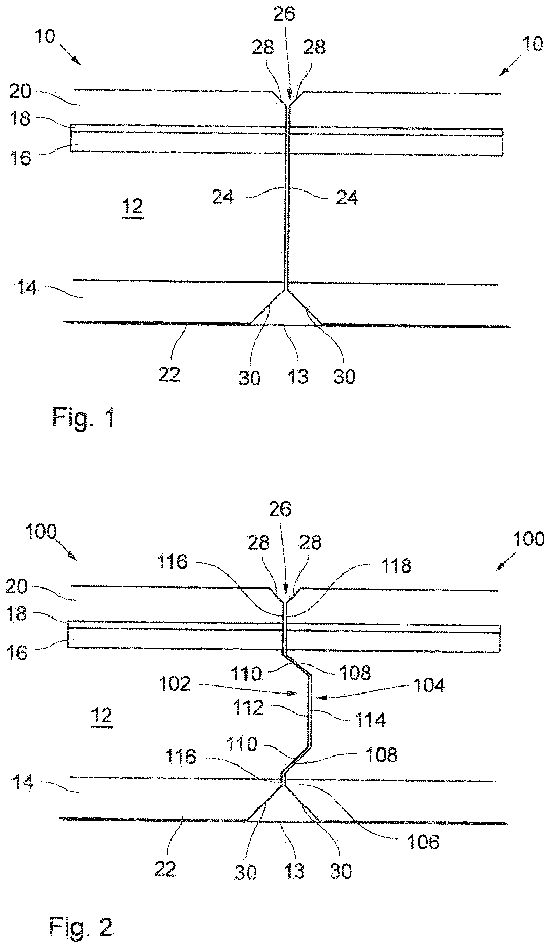

- Fig. 1 und 2: sind Querschnitte durch benachbart nebeneinander verlegte Bodenbelagselemente; Fig. 1 zeigt eine nicht-erfindungsgemäße Ausbildung der Stoßfläche; Fig. 2 zeigt eine erfindungsgemäße Ausbildung der Stoßfläche.

Fig. 1 zeigt zwei nebeneinander verlegte identische Bodenbelagselemente 10 zur Bildung eines Fußbodenbelags auf einem Untergrund 12. Jedes der Bodenbelagselemente 10 umfasst eine Kernschicht 12 aus einem weichen elastischen Polyurethan-Material. Dieses Material enthält überwiegend Polyurethan und darüber hinaus mineralische Füllstoffe zur Gewichtserhöhung. Das Bodenbelagselement 10 hat insgesamt eine mittlere Dichte zwischen 1,5 und 2,5 g/cm³ und ein Flächengewicht nach EN ISO 23997 zwischen 3,5 und 8,0 kg/m².

Unterhalb der Kernschicht 12 ist bei der vorliegenden Ausführungsform eine Rückenschicht 14 angeordnet, die ebenfalls aus Polyurethan bestehen kann. Abweichend von der hier dargestellten Ausführungsform können die Kernschicht 12 und die Rückenschicht 14 einstückig als eine einteilige Schicht ausgebildet sein.

Auf der Kernschicht 12 ist eine Glasfasermatte zur Dimension des Bodenbelagselements 10 angeordnet, die darüber hinaus das Eindruckverhalten verbessert. Auf der Glasfasermatte 16 sind eine Dekorschicht 18 und eine die Dekorschicht 18 abdeckende transparente Nutzschicht 20 angeordnet. Auf seiner Unterseite weist das Bodenbelagselement 10 einen rutschhemmenden Rücken 22 auf, der entweder an der Unterseite der Rückenschicht 14, wie im vorliegenden Ausführungsbeispiel dargestellt, oder unmittelbar an der Unterseite der Kernschicht 12 angeordnet ist, falls die Kernschicht 12 selbst die Unterseite des Bodenbelagselements 10 bildet. Der Rücken 22 hat rutschhemmende Eigenschaften. Diese können einerseits durch das Material bedingt sein, welches an der Unterseite des Bodenbelagselements 10 frei liegt, also im vorliegenden Ausführungsbeispiel durch das Material der Rückenschicht 14, sowie darüber hinaus durch eine Prägung wie etwa eine Wabenstruktur oder eine Pyramidenstruktur. Diese Prägung sorgt für eine Profilierung, die ein seitliches Verschieben des Bodenbelagselements 10 auf dem Untergrund erschwert.

Das Bodenbelagselement 10 liegt aufgrund seines relativ großen Flächengewichts satt und schwer auf dem Untergrund 13 auf. Aufgrund seines rutschhemmenden Rückens 22 lässt es sich nicht ohne weiteres seitlich verschieben. Die Elastizität des Bodenbelagselements 10 sorgt zudem für eine gute Anpassung an gegebenenfalls vorhandene Unebenheiten auf dem Untergrund 12.

Das Bodenbelagselement 10 weist eine Dornbiegung gemäß EN ISO 24344 von weniger als 20 mm auf, sowie einen Resteindruck gemäß EN ISO 24343 von weniger als 0,1 mm. Ferner weist das Bodenbelagselement 10 an seiner Unterseite eine Härte Shore A von 50 bis 90 auf.

Das Bodenbelagselement 10 weist an seinen Seitenkanten bei der vorliegenden Ausführungsform eine senkrechte Stoßfläche 24 zur Bildung einer Stoßverbindung mit einem benachbart verlegten Bodenbelagselement 10 auf. Gemäß Fig. 1 stoßen die beiden nebeneinander verlegten Bodenbelagselemente 10 somit an ihren senkrechten Stoßflächen verriegelungsfrei 24 aufeinander und schließen somit die Fuge 26 zwischen sich. An der Oberseite der Bodenbelagselemente 10 weisen diese jeweils eine Fase 28 auf, so dass eine Fuge mit dreieckigem Querschnitt an der Oberseite der Bodenbelagselemente 10 frei bleibt. Diese Fuge weist jedoch nur eine geringe Tiefe auf, so dass das Eindringen von Schmutz oder dergleichen zwischen die Stoßflächen 24 nicht möglich ist.

Unterhalb der Stoßflächen 24 sind an der Unterseite der Bodenbelagselemente 10 Fasen 30 an den Seitenkanten vorhanden, durch welche ein Zwischenraum 32 mit dreieckigem Querschnitt zwischen den Bodenbelagselementen 10 auf dem Untergrund 12 gebildet wird. In diesem Zwischenraum 32 kann sich Schmutz beim Zusammenschieben der Bodenbelagselemente 10 ansammeln. Dies erleichtert eine saubere schwimmende Verlegung auf dem Untergrund.

In der in Fig. 1 dargestellten Ausführungsform werden die Bodenbeläge 10 benachbart auf Stoß mit einander berührenden Stoßflächen 24 verlegt. Ein einzelnes Bodenbelagselement 10 lässt sich somit durch Anheben vom Untergrund 12 aus dem Fußbodenverbund lösen, ohne dass benachbarte Bodenbelagselemente 10 ebenfalls angehoben werden müssen. Die Elastizität der Bodenbelagselemente 10 erleichtert diesen Vorgang. Ein Auswechseln einzelner Bodenbelagselemente 10 ist somit möglich, ohne dass größere Teile des Verbunds aufgelöst werden müssen.

Bei der in Fig. 2 dargestellten erfindungsgemäßen Ausführungsform haben die Bodenbelagselemente 100 den gleichen Schichtaufbau wie die Bodenbelagselemente 10 aus Fig. 1. Auch die Materialeigenschaften bezüglich Dichte, Flächengewicht, Dornbiegung, Resteindruck und Härte sind die gleichen. Fasen 28 und 30 sind an den Oberseiten und Unterseiten der Bodenbelagselemente 100 an deren Seitenkanten wie in Fig. 1 gebildet.

Die Bodenbelagselemente 100 aus Fig. 2 sind jedoch erfindungsgemäß an ihren Seitenkanten profiliert. Sie weisen nämlich Nut-Feder-Profile auf, die in horizontaler Richtung verriegelungsfrei ineinander einschiebbar sind. Im einzelnen umfasst das Bodenbelagselement 100 auf der rechten Seite in Fig. 2 eine trapezförmige Nut 104, die von der Seitenkante des in Fig. 2 rechten Bodenbelagselements 100 vorspringt. Eine Feder 102 mit gleichem Querschnitt ist im linken Bodenbelagselements 100 ausgebildet. Werden die Bodenbelagselemente 100 auf dem Untergrund 12 aufliegend in horizontaler Richtung gegeneinander geschoben, so dass ihre Seitenkanten gegeneinander stoßen, fügt sich die Feder 102 in die Nut 104 ein und schließt somit die Fuge an der Verbindungsstelle der beiden Bodenbeschlagselemente 100. Der Zwischenraum zwischen den Bodenbelagselementen 100 wird somit in senkrechter Richtung zuverlässiger verschlossen, als es bei der Ausführungsform in Fig. 1 der Fall ist.

Allerdings kann auch in diesem Fall noch ein einzelnes Bodenbelagselement 100 aus dem Fußbodenverbund durch Anheben vom Untergrund 12 herausgehoben werden.

Dies ist durch die Elastizität und Kompressibilität der weichen elastischen Kernschicht 12 bedingt. Wird nämlich beispielsweise in Fig. 2 das rechte Bodenbelagselement 100 senkrecht an seiner Seitenkante angehoben, kann die Feder 102 geringfügig zur Mitte des linken Bodenbelagselements 100 hin ausweichen und sich zusammendrücken, so dass der die Nut 104 nach unten begrenzende Teil 106 der Seitenkante des rechten Bodenbelagselements 100 darüber hinweg gleiten kann. Zudem wird sich dieser Teil 106 selbst beim Auftreffen auf die Feder 102 etwas seitlich komprimieren und somit ausweichen. Er kann somit über die Feder 102 hinweg nach oben gleiten, so dass ein Ausheben des Bodenbelagselements 100 problemlos möglich ist. Hierzu muss ein gewisser Widerstand aufgewendet werden, der zwar verhindert, dass sich der Verbund des Fußbodenbelags im verlegten Zustand ohne weiteres löst, jedoch das oben beschriebene Ausheben mit einem gewissen Kraftaufwand ohne weiteres zulässt. Ein erneutes Einsetzen eines Bodenbelagselements 100 in umgekehrter Richtung ist problemlos möglich.

Dieser oben beschriebene Vorgang des Aushebens eines einzelnen Bodenbelagselements 100 wird dadurch begünstigt, dass sowohl die Feder 102 als auch die Nut 104 etwa trapezförmig ausgebildet sind und somit abgeschrägte Flanken 108, 110 aufweisen. Die untere abgeschrägte Flanke 108 der Nut 104 trifft somit beim Anheben auf die entsprechende untere schräge Flanke 110 der Feder 102, gleitet auf dieser und drückt die Feder 102 nach innen, wie zuvor beschrieben.

Auch die Ausführungsform des Bodenbelagselements 100 in Fig. 2 weist senkrechte Stoßflächen an den Seitenkanten auf, nämlich auf der Oberseite 112 der Feder 102 und an dem Grund 114 der Nut 104, sowie auf dem linken Bodenbelagselement 100 oberhalb und unterhalb der Feder 102 in Form von Stoßflächen 116 und oberhalb und unterhalb der Nut 104 in Form weitere Stoßflächen 118. Im zusammen geschobenen Zustand des Bodenbelagselements 100 sind die aufeinander treffenden Stoßflächen 116 bzw. 118 oberhalb und unterhalb der Nut-Feder-Verbindung in horizontaler Richtung gegenüber den Stoßflächen 112 und 114 innerhalb der Nut-Feder-Verbindung versetzt.

Die Bodenbelagselemente 100 der hier vorliegenden Ausführungsform weisen ebenfalls einen rutschhemmenden Rücken 22 mit einer Prägung in Form einer Wabenstruktur oder einer Pyramidenstruktur auf.

Die Dicke der Bodenbelagselemente 10, 100 mit dem oben beschriebenen Aufbau (mit Dekorschicht 18 und Nutzschicht 20) beträgt beispielsweise zwischen 4 und 5 mm.

In den beiden Ausführungsformen des Bodenbelagselements 10, 100 kann wahlweise anstatt der Dekorschicht 18 und der Nutzschicht 20 eine textile obere Schicht auf der Kernschicht 12 angebracht sein. Diese textile obere Schicht kann ein Flor oder dergleichen sein. Das Bodenbelagselement 10, 100 ist dann wie eine Teppichfliese zu verwenden. Die Dicke eines solchen Bodenbelagselements 10, 100 liegt ausschließlich der textilen Schicht beispielsweise zwischen 2 und 3 mm.

## Patentansprüche

1. Bodenbelagselement (10, 100), mit einer mittleren Dichte zwischen 1,5 und 2,5 g/cm³ und einem Flächengewicht (EN ISO 23997) zwischen 3,5 und 8 kg/m², umfassend einen rutschhemmenden Rücken (22), der eine Prägung aufweist, wobei die Seitenkanten des Bodenbelagselements (10, 100) derart ausgebildet sind, dass zwei benachbart verlegte Bodenbelagselemente (10, 100) an ihren Seitenkanten verriegelungsfrei aufeinander stoßen, **dadurch gekennzeichnet, dass** das Bodenbelagselement zumindest eine weiche elastische Kernschicht (12) aus einem PU-Material umfasst, und dass das Bodenbelagselement (10, 100) an seinen Seitenkanten zumindest eine Stoßfläche (24; 112, 114, 116, 118) zur Bildung einer Stoßverbindung mit einem benachbart verlegten Bodenbelagselement (10, 100) sowie jeweils eine Fase (28, 30) an der Oberseite und an der Unterseite des Bodenbelagselements (10, 100) aufweist, und an seinen Seitenkanten Nut-Feder-Profile aufweist, die derart ausgebildet sind, dass Nuten (102) und Federn (104) an einander zugewandten Seitenkanten benachbart verlegter Bodenbelagselemente (100) in horizontaler Richtung verriegelungsfrei ineinander einschiebbar sind, und dass die Nuten (102) und Federn (104) der Nut-Feder-Profile jeweils einen etwa trapezförmigen Querschnitt mit abgeschrägten Flanken (108, 110) aufweisen.

2. Bodenbelagselement gemäß Anspruch 1, **dadurch gekennzeichnet, dass** der Rücken (22) durch die Unterseite einer elastischen Rückenschicht (14) aus einem PU-Material gebildet wird, die unterhalb der Kernschicht (12) angeordnet ist.

3. Bodenbelagselement gemäß Anspruch 1, **dadurch gekennzeichnet, dass** der Rücken (22) durch die Unterseite der Kernschicht (12) gebildet wird.

4. Bodenbelagselement gemäß einem der vorhergehenden Ansprüche, **dadurch gekennzeichnet, dass** die Prägung eine Wabenstruktur oder eine Pyramidenstruktur aufweist.

5. Bodenbelagselement gemäß einem der vorhergehenden Ansprüche, **dadurch gekennzeichnet, dass** die Fase (30) an der Unterseite des Bodenbelagselements ausgeprägter ist als die Fase (28) an dessen Oberseite.

6. Bodenbelagselement gemäß einem der vorhergehenden Ansprüche, **dadurch gekennzeichnet, dass** zumindest die Kernschicht (12) Füllstoffe zur Gewichtserhöhung enthält.

7. Bodenbelagselement gemäß einem der vorhergehenden Ansprüche, **gekennzeichnet durch** eine Glasfasermatte (16), die auf oder in der Kernschicht (12) auf- bzw. einliegt.

8. Bodenbelagselement gemäß einem der vorhergehenden Ansprüche, **gekennzeichnet durch** eine Dekorschicht (18) und eine die Dekorschicht (18) abdeckende transparente Nutzschicht (20).

9. Bodenbelagselement gemäß einem der Ansprüche 1 bis 7, **gekennzeichnet durch** eine textile Schicht, die die Oberseite des Bodenbelagselements bildet.

10. Bodenbelagselement gemäß einem der vorhergehenden Ansprüche, **dadurch gekennzeichnet, dass** der Rücken (22) einen Resteindruck nach EN ISO 24343 von weniger als 0,1 mm aufweist.

11. Bodenbelagselement gemäß einem der vorhergehenden Ansprüche, **dadurch gekennzeichnet, dass** das Bodenbelagselement (10, 100) eine Härte Shore A von 50 bis 90 aufweist.

## Claims

1. Floor covering element (10, 100) with an average density of between 1.5 and 2.5 g/cm³ and a surface weight (EN ISO 23997) between 3.5 and 8 kg/m², comprising an anti-slip backing (22) which has an embossing, wherein the lateral edges of the floor covering element (10, 100) are designed such that two floor covering elements (10, 100) laid adjacent to one another abut on one another at their lateral edges in an interlock-free manner, **characterised in that** the floor covering element includes at least one soft elastic core layer (12) made of a PU material, and that the floor covering element (10, 100) has at its lateral edges at least one abutting surface (24; 112, 114, 116, 118) for forming a butt joint with an adjacently laid floor covering element (10, 100) as well as in each case a chamfer (28, 30) on the top side and at the bottom side of the floor covering element (10, 100), and has at its lateral edges tongue-and-groove profiles, which are configured such that grooves (102) and tongues (104) at lateral edges, facing one another, of adjacently laid floor covering elements (100) can be slid into one another in horizontal direction in an interlock-free manner, and that the grooves (102) and tongues (104) of the tongue-and-groove profiles have in each case an approximately trapezoidal cross-section with chamfered flanks (108, 110).

2. Floor covering element according to claim 1, **characterised in that** the backing (22) is formed by the bottom side of an elastic layer (14) made of a PU material, which elastic layer is disposed beneath the core layer (12).

3. Floor covering element according to claim 1, **characterised in that** the backing (22) is formed by the bottom side of the core layer (12).

4. Floor covering element according to any of the preceding claims, **characterised in that** the embossing has a honeycomb structure or a pyramid structure.

5. Floor covering element according to any of the preceding claims, **characterised in that** the chamfer (30) on the bottom side of the floor covering element is more pronounced than the chamfer (28) on its top side.

6. Floor covering element according to any of the preceding claims, **characterised in that** at least the core layer (12) contains fillers for increasing weight.

7. Floor covering element according to any of the preceding claims, **characterised by** a glass fibre matting (16) which lies on or in the core layer (12).

8. Floor covering element according to any of the preceding claims, **characterised by** a decorative layer (18) and a transparent wearing layer (20) covering the decorative layer (18).

9. Floor covering element according to any of claims 1 to 7, **characterised by** a textile layer which forms the top side of the floor covering element.

10. Floor covering element according to any of the preceding claims, **characterised in that** the backing (22) has a residual indentation according to EN ISO 24343 of less than 0.1 mm.

11. Floor covering element according to any of the preceding claims, **characterised in that** the floor covering element (10, 100) has a Shore hardness A of 50 to 90.

## Revendications

1. Élément de revêtement de sol (10, 100), avec une densité moyenne entre 1,5 et 2,5 g/cm³ et un grammage (EN ISO 23997) entre 3,5 et 8 kg/m², comprenant une face arrière antidérapante (22), qui présente une imprégnation, dans lequel les bords latéraux de l'élément de revêtement de sol (10, 100) sont réalisés de sorte que deux éléments de revêtement de sol (10, 100) posés de manière adjacente s'aboutent l'un l'autre sans verrouillage au niveau de leurs bords latéraux, **caractérisé en ce que** l'élément de revêtement de sol comprend au moins une couche centrale (12) élastique molle en un matériau PU, et que l'élément de revêtement de sol (10, 100) présente au niveau de ses bords latéraux au moins une surface d'about (24 ; 112, 114, 116, 118) pour la formation d'une liaison d'aboutement avec un élément de revêtement de sol (10, 100) posé de manière adjacente ainsi que respectivement un chanfrein (28, 30) au niveau de la face supérieure et au niveau de la face inférieure de l'élément de revêtement de sol (10, 100), et présente au niveau de ses bords latéraux des profilés à rainure et languette, qui sont réalisés de sorte que des rainures (102) et des languettes (104) au niveau de bords latéraux tournés les uns vers les autres d'éléments de revêtement de sol (100) posés de manière adjacente peuvent être insérées l'une dans l'autre sans verrouillage dans la direction horizontale, et que les rainures (102) et les languettes (104) des profilés à rainure et languette présentent respectivement une section transversale à peu près trapézoïdale avec des flancs chanfreinés (108, 110).

2. Élément de revêtement de sol selon la revendication 1, **caractérisé en ce que** la face arrière (22) est formée par la face inférieure d'une couche arrière élastique (14) en un matériau PU, qui est agencée en-dessous de la couche de noyau (12).

3. Élément de revêtement de sol selon la revendication 1, **caractérisé en ce que** la face arrière (22) est formée par la face inférieure de la couche de noyau (12).

4. Élément de revêtement de sol selon l'une quelconque des revendications précédentes, **caractérisé en ce que** l'imprégnation présente une structure alvéolaire ou une structure pyramidale.

5. Élément de revêtement de sol selon l'une quelconque des revendications précédentes, **caractérisé en ce que** le chanfrein (30) est plus imprégné au niveau de la face inférieure de l'élément de revêtement de sol que le chanfrein (28) au niveau de sa face supérieure.

6. Élément de revêtement de sol selon l'une quelconque des revendications précédentes, **caractérisé en ce qu'**au moins la couche centrale (12) contient des matières de remplissage pour l'augmentation du poids.

7. Élément de revêtement de sol selon l'une quelconque des revendications précédentes, **caractérisé par** une natte de fibres de verre (16), qui est posée sur ou dans la couche centrale (12).

8. Élément de revêtement de sol selon l'une quelconque des revendications précédentes, **caractérisé par** une couche décorative (18) et une couche utile (20) transparente recouvrant la couche décorative (18).

9. Élément de revêtement de sol selon l'une quelconque des revendications 1 à 7, **caractérisé par** une couche textile, qui forme la face supérieure de l'élément de revêtement de sol.

10. Élément de revêtement de sol selon l'une quelconque des revendications précédentes, **caractérisé en ce que** la face arrière (22) présente une empreinte résiduelle selon EN ISO 24343 inférieure à 0,1 mm.

11. Élément de revêtement de sol selon l'une quelconque des revendications précédentes, **caractérisé en ce que** l'élément de revêtement de sol (10, 100) présente une dureté Shore A de 50 à 90.
